# EUROPEAN PATENT APPLICATION

(11) **EP 2 151 583 A2**
(43) Date of publication of application: **10.02.2010**
(21) Application number: 09010075.1
(22) Date of filing: 04.08.2009
(51) Int. Cl.: F04D 29/10, F16J 15/44, F16J 15/447

(54) **Centrifugal compressor**

(30) Priority: 07.08.2008 JP 2008204570
(71) Applicant: Hitachi Plant Technologies, Ltd., Tokyo 170-8466 (JP)
(72) Inventor: Magara, Yohei, Chiyoda-ku Tokyo 100-8220 (JP); Yamaguchi, Kazuyuki, Chiyoda-ku Tokyo 100-8220 (JP); Kuwano, Tetsuya, Tokyo 170-8466 (JP); Miura, Haruo, Tokyo 170-8466 (JP); Takahashi, Naohiko, Tokyo 170-8466 (JP)
(74) Representative: Strehl Schübel-Hopf & Partner

(57) **Abstract**

The present invention provides a centrifugal compressor that inhibits possible leakage while reducing a destabilizing fluid force generated in a seal to prevent the possible instable vibration of a rotor, the centrifugal compressor being capable of being efficiently and stably operated under a high-speed and high-pressure condition. The centrifugal compressor includes a casing, a rotor rotatably installed in the casing and having an impeller, and seals provided in the clearance between the casing and the rotor to prevent a fluid from leaking through the clearance from a high pressure side to a low pressure side. The rotor rotates to compress gas. For example, the balance piston seal is composed of a damper seal with a plurality of holes and a labyrinth seal with an annular parallel groove; the damper seal and the labyrinth seal are continuously provided. The damper seal is disposed on the high pressure side in a leakage flow direction. The labyrinth seal is disposed on the low pressure side in the leakage flow direction.

## Description

### BACKGROUND OF THE INVENTION

The present invention relates to a seal structure for a centrifugal compressor, and is suitable particularly for preventing unstable vibration of a rotor during a high-speed, high-pressure operation.

Centrifugal compressors compressing gas such as air are widely utilized for various machines. Inside of a casing of a centrifugal compressor, a rotating shaft with an impeller installed thereon is rotatably supported by bearings. Gas sucked through a suction port is compressed by rotation of the impeller and discharged through a discharge port. The gas compressed by the impeller is sealed by an impeller eye seal of an impeller eye, an inter-stage seal between stages of the impeller, and a balance piston seal provided in a last stage.

A labyrinth seal and a damper seal are known as conventional seal structures. As shown in a sectional view of any impeller stage in a centrifugal compressor in FIG. 1 of JP Published Patent Application No. 6-249186, the labyrinth seal structure has a large number of annular fins in the clearance between a rotor and a stator. Thus, a pressure loss in a fluid flowing through the top clearance between the fins and the rotor reduces the leakage of the fluid.

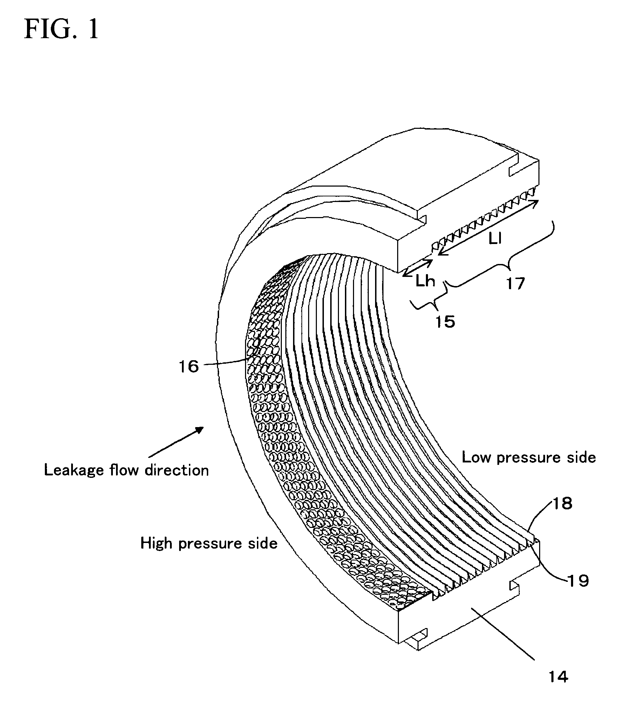

The damper seal has a seal structure with a plurality of holes formed in a seal stator surface and is classified into a hole pattern seal, a honeycomb seal, and the like. The hole pattern seal structure has a large number of holes in the seal stator surface as shown in JP Published Patent Application No. 6-249186, for example. Thus, a pressure loss in a fluid flowing through the clearance between the uneven seal stator surface and the rotor reduces the leakage of the fluid. Furthermore, the honeycomb seal is disclosed in, for example, JP Published Patent Application Nos. 11-44201 and 2007-113458. In particular, Fig. 1(b) of JP Published Patent Application No. 11-44201 clearly shows a honeycomb seal structure. The seal stator surface shown in Fig. 1(b) has a honeycomb structure with a large number of hexagonal shaped holes. Thus, a pressure loss in a fluid flowing by the uneven seal stator surface reduces the leakage of the fluid.

In the above-described seals, when the shaft is displaced in a radial direction with the leakage flow velocity of the seal having a circumferential component, the circumferential pressure distribution in the seal becomes asymmetrical. This results in a fluid force (hereinafter referred to as a "destabilizing fluid force) destabilizing the rotor. In the worst case, the destabilizing fluid force causes the rotor to vibrate unstably. In particular, if the rotor rotates at high speed or there is a high differential pressure between the seal inlet and outlet, the destabilizing fluid force is increased. As is well known, if the damper seal such as the hole pattern seal or the honeycomb seal is used instead of the labyrinth seal, the unstable vibration of the rotor caused by the destabilizing fluid force can be stabilized because the damper seal exerts a higher damping effect than the labyrinth seal.

The labyrinth seal is excellent in the leakage prevention property. However, the increased discharge pressure of the centrifugal compressor increases the destabilizing fluid force, thus reducing the vibration stability of the rotor. The damper seal exerts a higher damping effect than the labyrinth seal, thus stabilizing the vibration of the rotor. However, the damper seal is inferior in the leakage prevention property, thus reducing the efficiency of the compressor.

### BRIEF SUMMARY OF THE INVENTION

An object of the present invention is to provide a centrifugal compressor that can be stably operated under a high-speed and high-pressure condition, with possible leakage from a seal prevented.

To accomplish the object, the present invention provides a centrifugal compressor comprising a casing, a rotor comprising a rotating shaft rotatably installed in the casing and an impeller installed on the rotating shaft, and a seal preventing a fluid from flowing between a stator and the rotor in the casing from a high pressure side to a low pressure side, the impeller rotating to compress gas, wherein in the seal, a damper seal with a plurality of holes and a labyrinth seal with an annular parallel groove are continuously provided on a stator surface.

Furthermore, preferably, in the seal, the damper seal is disposed on the high pressure side in a leakage flow direction of the seal, and the labyrinth seal is disposed on a low pressure side in the leakage flow direction of the seal.

Furthermore, preferably, in the seal, length of the damper seal in the leakage flow direction is set to at most half of that of the entire seal.

Furthermore, preferably, in the seal, the length of the damper seal in the leakage flow direction is set equal to or larger than the length of the entire seal multiplied by 0.05.

According to the present invention, the damper seal and the labyrinth seal are continuously provided. Thus, the labyrinth seal can inhibit possible leakage, while the damper seal can stabilize the rotor. Moreover, the damper seal is disposed on the high pressure side of the seal, whereas the labyrinth seal is disposed on the low pressure side. Thus, on the high pressure side, where a relatively strong destabilizing fluid force may be generated, the damper seal can exert a damping effect. Furthermore, on the high pressure side, corresponding to a leakage flow upstream side, the circumferential component of the leakage flow velocity can be reduced. This enables the rotor to be further stabilized. Additionally, the length of the damper seal in the leakage flow direction is set to at most half of that of the entire seal. This allows the rotor to be effectively stabilized, with possible leakage from the seal inhibited.

### BRIEF DESCRIPTION OF THE SEVERAL VIEWS OF THE DRAWING

FIG. 1 is a perspective view showing, in detail, the structure of a stator side of a balance piston seal according to an embodiment of a centrifugal compressor according to the present invention;
FIG. 2 is a sectional view showing the general structure of an embodiment of the centrifugal compressor according to the present invention;
FIG. 3 is an enlarged partially sectional view showing the inside of an area A in FIG. 2;
FIG. 4 is a diagram showing the relationship between a seal structure ratio (the rate of the entire seal length accounted for by the length of a hole pattern seal) and a seal instability indicator according to the embodiment of the centrifugal compressor according to the present invention;
FIG. 5 is a diagram showing the relationship between the rate of the entire seal length accounted for by the length of the hole pattern seal and the leakage flow rate of the entire seal according to the embodiment of the centrifugal compressor according to the present invention; and
FIG. 6 is a sectional perspective view showing a variation of the structure of the stator side of the balance piston seal according to the embodiment of the centrifugal compressor according to the present invention;

### DETAILED DESCRIPTION OF THE INVENTION

An embodiment of the present invention will be described below with reference to the drawings.

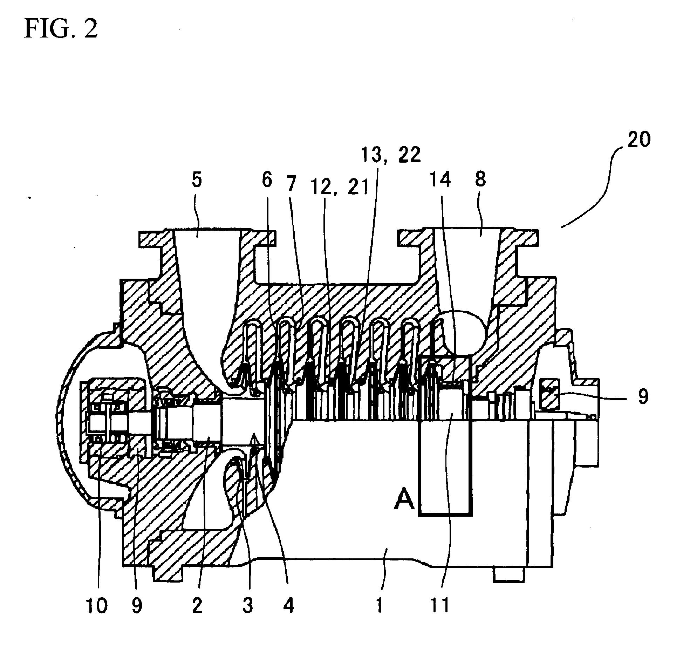

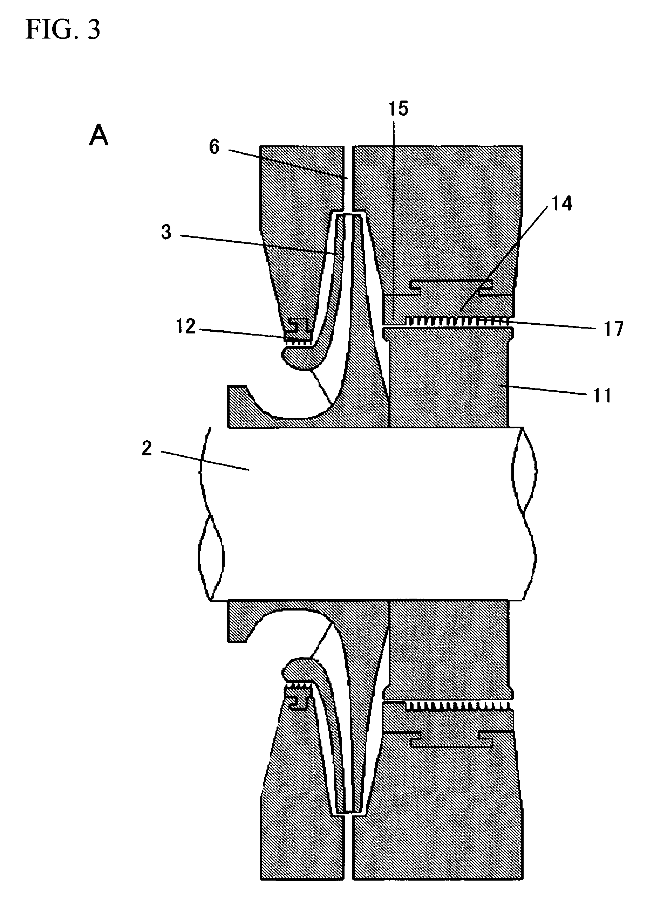

FIG. 1 is a perspective view showing, in detail, the structure of a balance piston seal 14 in an embodiment of a centrifugal compressor 20 according to the present invention. An illustrated damper seal is a hole pattern seal 15 made up of a large number of holes 16. FIG. 2 shows the general structure of a centrifugal compressor 20 according to the present invention. FIG. 3 is a diagram showing an area A in FIG. 2.

In FIG. 2, the centrifugal compressor 20 includes a casing 1 (stationary member), a rotating shaft 2 rotatably provided in the casing 1, and a rotor 4 having a multi-stage (in FIG. 2, seven-stage) impeller 3 installed on the rotating shaft 2. The casing 1 includes a suction channel 5 through which gas is introduced into a first stage of the impeller 3, a diffuser 6 that converts kinetic energy from each stage of the impeller 3 into pressure energy, a return channel 7 through which compressed gas from the diffuser 6 is introduced into the following stage of the impeller 3, and a discharge channel 8 through which gas from the final stage of the impeller 3 is discharged.

The rotating shaft 2 of the rotor 4 is rotatably supported by radial bearings 9 provided at a suction-side (the left side of FIG. 2) end and a discharge-side (the right side of FIG. 2) end. A thrust bearing 10 is also provided at the suction-side end of the rotating shaft 2 to receive a thrust load. A balance piston 11 is provided at the discharge-side end to offset the thrust load. Additionally, a driver such as a motor (not shown in the drawings) is coupled to the discharge-side end of the rotating shaft 2. The driver drives the rotor 4, which is thus rotated. The rotation of the rotor 4 allows gas to be sucked through the suction channel 5, sequentially compressed by the multi-stage impeller 3, and finally discharged through the discharge channel 8.

An impeller eye seal 12 is provided in the clearance between each stage of the impeller 3 and the impeller eye 21. The impeller eye seal 12 inhibits gas from the impeller 3 from passing through the clearance and back to the inlet of the impeller 3 (see FIG. 3). Furthermore, an inter-stage seal 13 is provided between each stage of the impeller 3 and the succeeding stage of the impeller 3 in the clearance between the inter-stage 22 of the rotor 4 and the casing 1. The inter-stage seal 13 inhibits gas from the return channel 7 from passing through the clearance and back to the outlet of the preceding stage of the impeller 3. Additionally, as shown in FIG. 3, a balance piston seal 14 is provided in the clearance between the balance piston 11 of the rotor 4 and the casing 1. The balance piston seal 14 inhibits high-pressure gas from the final stage of the impeller 3 from leaking to a low pressure portion.

The balance piston seal 14 is composed of two parts shaped like the two halves of a cylinder. FIG. 1 shows one of the halves. In FIG. 1, the balance piston seal 14 has a hole pattern seal 15 located on a stator surface opposite to the balance piston 11 and on a high pressure side of a leakage flow direction and composed of a plurality of holes 16, and a labyrinth seal 17 located on a low pressure side of the leakage flow direction and composed of annular parallel fins 18 and annular parallel grooves 19. The length of the hole pattern seal 15 in the leakage flow direction is defined as Lh. The length of the labyrinth seal 17 in the leakage flow direction is defined as L1.

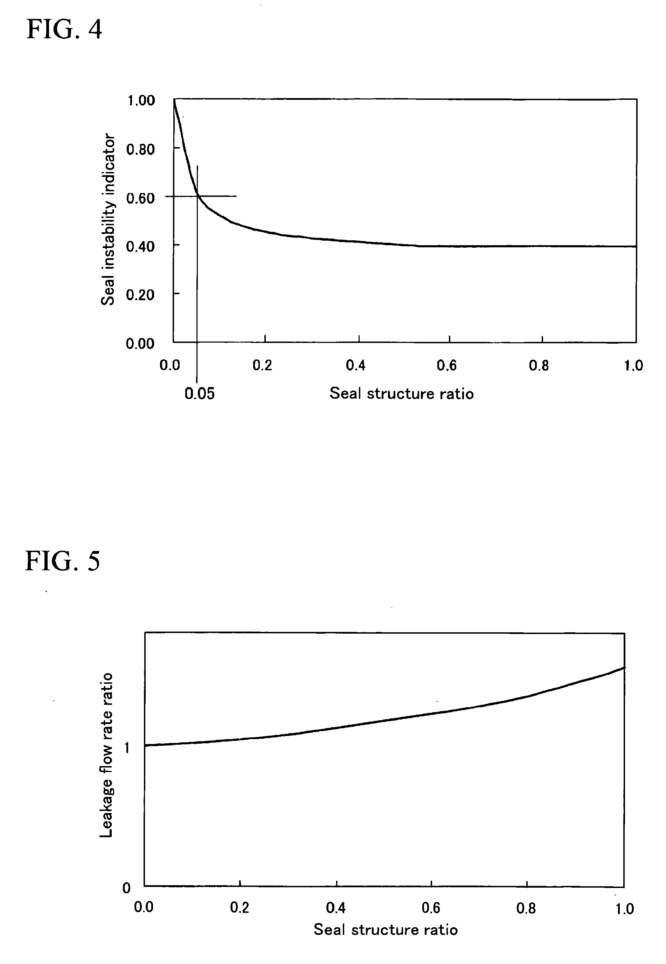

FIG. 4 is a diagram showing an example of the relationship between the rate of the length of the hole pattern seal 15 in the leakage flow direction accounted for by the entire seal length in the leakage flow direction (the rate is hereinafter referred to as a seal structure ratio) and a seal instability indicator. The seal structure ratio is calculated to be Lh/(Lh+L1) where Lh denotes the length of hole pattern seal 15 and L1 denotes the length of the labyrinth seal. The seal instability indicator is calculated to be Kxy/(Cxx·ω)) that is the ratio of the stiffness coefficient Kxy of the seal obtained by dividing the destabilizing fluid force by the radial displacement of the rotating shaft 2 to the product of the damping coefficient Cxx of the seal for the radial displacement and the eigen angular frequency ω of the rotor 4. A decrease in seal instability indicator improves the stability of the rotor. FIG. 4 shows that a seal structure ratio of higher than 0.5 allows the hole pattern seal to exert almost constant stabilizing effect. Furthermore, a seal structure ratio close to 0.0 rapidly increases the seal instability indicator. Thus, to ensure the stability of the seal, the seal instability indicator needs to be kept at 0.6 or less. Desirably, the seal structure ratio is correspondingly kept at about 0.05 or more.

FIG. 5 is a diagram showing an example of the relationship between the seal structure ratio and the leakage flow rate ratio of the entire seal observed when the entire seal length is constant. The leakage flow rate ratio is the leakage flow rate expressed in terms of ratio where the leakage flow rate is set to 1 when the seal structure ratio is 0. The leakage flow rate increases consistently with the seal structure ratio, that is, with the rate of the hole pattern seal. FIGS. 3 and 4 show that the seal structure ratio may be set to at most 0.5 in order to improve the stability of the rotor while inhibiting a possible increase in leakage flow rate.

At the same seal length, the above-described structure enables a reduction in leakage flow rate compared to a structure in which the balance piston seal 14 is entirely composed of the hole pattern seal 15. Moreover, a stronger destabilizing fluid force is generated on the high pressure side of the seal. However, in the present embodiment, the hole pattern seal 15, exerting the damping effect, is disposed on the high pressure side. This improves the stability of the rotor. Furthermore, the hole pattern seal 15 disposed on the high pressure side, corresponding to the upstream side of the leakage flow, enables a reduction in the circumferential component of the velocity of the leakage flow toward the labyrinth seal 17, located on the low pressure side, that is, the downstream side. Thus, the destabilizing fluid force in the labyrinth seal 17 can be reduced, allowing the possible unstable vibration of the rotor 4 to be inhibited.

In the example described in the embodiment, the hole pattern seal 15 with the circular holes 16 formed therein at equal intervals is disposed on the high pressure side of the balance piston seal 14 as a damper seal. However, the present invention is not limited to this aspect. For example, the damper seal may be a honeycomb seal composed of hexagonal shaped holes or a seal composed of triangular or rectangular shaped holes.

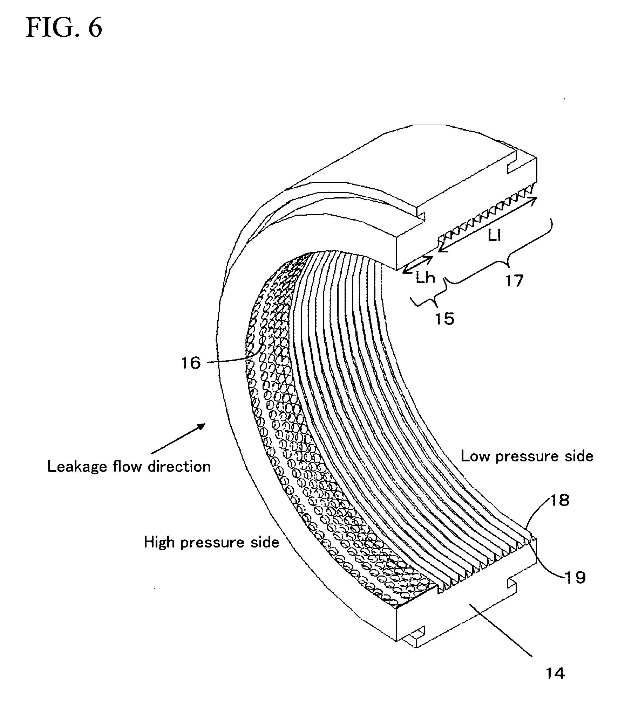

Furthermore, as shown in FIG. 1, the present invention is not limited to the pattern in which the holes 16 are closely arranged at equal intervals. For example, as shown in FIG. 6, the seal may have a portion in which no hole 16 is provided in part of the axial direction. Moreover, the intervals of the holes may be varied in the circumferential direction.

Additionally, in the above-described example, the hole pattern seal 15 and the labyrinth seal 17 are composed of the continuous parts. However, the present invention is not limited to this aspect. For example, the hole pattern seal 15 and the labyrinth seal 17 may be made of separate parts, which may then be combined together.

The balance piston seal 14 has been described by way of example. However, similar effects can be exerted by applying the present invention to the impeller eye seal 12 and the inter-stage seal 13.

## Claims

1. A centrifugal compressor comprising ;
a casing,
a rotor comprising a rotating shaft rotatably installed in said casing and an impeller installed on said rotating shaft, and
a seal preventing a fluid from leaking between said casing and said rotor from a high pressure side to a low pressure side,
wherein said seal has a damper seal with a plurality of cavity formed on a seal surface and a labyrinth seal with a plurality of annular grooves.

2. The centrifugal compressor according to claim 1, wherein said labyrinth seal is provided juxtaposed to said damper seal.

3. The centrifugal compressor according to claim 2, wherein said damper seal is disposed on a high pressure side in a leakage flow of said seal, and said labyrinth seal is disposed on a low pressure side in the leakage flow of said seal.

4. The centrifugal compressor according to claim 3, wherein a length of said damper seal in a leakage flow direction is set to at most half of that of said seal.

5. The centrifugal compressor according to claim 4, wherein a length of said damper seal in a leakage flow direction is set to or larger than a length of said seal multiplied by 0.05.
